(19) **Europäisches Patentamt**
**European Patent Office**
**Office européen des brevets**

(11) **EP 4 184 209 A1**

(12) **EUROPEAN PATENT APPLICATION**
published in accordance with Art. 153(4) EPC

(43) Date of publication:
**24.05.2023 Bulletin 2023/21**

(21) Application number: **20946445.2**

(22) Date of filing: **20.07.2020**

(51) International Patent Classification (IPC):
**G01S 13/90** *(2006.01)* **G06T 7/00** *(2017.01)*

(52) Cooperative Patent Classification (CPC):
**G01S 13/90; G06T 7/00**

(86) International application number:
**PCT/JP2020/028065**

(87) International publication number:
**WO 2022/018791 (27.01.2022 Gazette 2022/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NEC Corporation**
**108-8001 Tokyo (JP)**

(72) Inventors:
• **KANEKO Eiji**
**Tokyo 108-8001 (JP)**
• **TODA Masato**
**Tokyo 108-8001 (JP)**

(74) Representative: **Betten & Resch**
**Patent- und Rechtsanwälte PartGmbB**
**Maximiliansplatz 14**
**80333 München (DE)**

(54) **IMAGE PROCESSING DEVICE AND IMAGE PROCESSING METHOD**

(57) The image processing device 60 includes an image deformation unit 61 which deforms object presence areas in two object presence images, in which one or more objects are present, obtained from each of two observed images to generate two deformed images, based on an observation angle of each of the two observed images and a size of the object appearing in each of the two observed images, and an image generation unit 62 which generates a synthesized image by synthesizing the two deformed images, determines difference of the object between the two object presence images, and generates an image capable of identifying the determined difference.

FIG. 11

EP 4 184 209 A1

## Description

## Technical Field

This invention relates to an image processing device and an image processing method for generating an image capable of identifying a difference area in an image with another image.

## Background Art

In order to understand damage situation based on disaster such as a flood, a forest fire, a volcanic eruption, an earthquake, a tsunami or a drought, situation of urban development, or movement and retention of cargoes and people, a change detection technology is utilized which detects areas where the ground surface conditions have changed, based on images taken from high locations, for example, images taken by a satellite.

Synthetic aperture radar (SAR) technology is a technology which can obtain an image (hereinafter referred to as a SAR image) equivalent to an image by an antenna having a large aperture, when a flying object such as artificial satellite, aircraft, or the like transmits and receives a radio wave while the flying object moves. The synthetic aperture radar is utilized, for example, for analyzing a ground surface displacement by signal-processing reflected waves from the ground surface, etc.

Hereinafter, an image taken by a satellite, etc. is referred to as an observed image. Unless otherwise specified, both optical and SAR images are acceptable for an observed image.

Generally, in change detection, two images obtained by observing the same area at different times are compared. By comparing two images, a change in one or more bodies (objects) in the area is detected. A change in an object may be, for example, appearance of a new object or disappearance of an object. Hereinafter, each of the two images is referred to as an object presence image or an object map, and the two images are sometimes referred to as an image pair. An image capable of identifying a difference part between two images based on the comparison of the two images is sometimes referred to as a difference map or a synthesized difference map.

## Citation List

## Patent Literature

PTL 1: Japanese Patent Laid-Open No. 2018-194404

## Non patent Literature

NPL 1: M. A. Lebedev, et al., "CHANGE DETECTION IN REMOTE SENSING IMAGES USING CONDITIONAL ADVERSARIAL NETWORKS", The International Archives of the Photogrammetry, Remote Sensing and Spatial Information Sciences, Volume XLII-2, 2018

## Summary of Invention

## Technical Problem

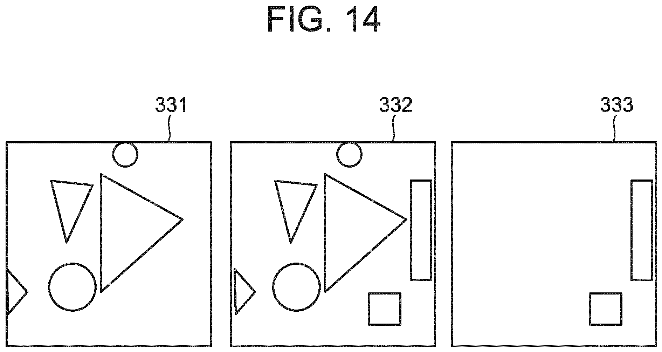

FIG. 14 is an explanatory diagram showing a generation method of a synthesized difference map 333 described in non-patent literature 1. In FIG. 14, the first image 331 corresponds to an object map which is the first input image. The second image 332 corresponds to an object map which is the second input image. In the method described in non-patent literature 1, the first image 331 and the second image 332 are synthesized to generate the synthesized difference map 333 while allowing for a few pixels shift between the first image 331 and the second image 332. In the synthesized difference map 333, a difference part between the first image 331 and the second image 332 appears.

Patent literature 1 describes a method for generating a classifier (a trained model) using two types of images (image pair) generated from interferometric SAR images and correct answer data as learning data (training data). In patent literature 1, ground surface change is determined using the trained model.

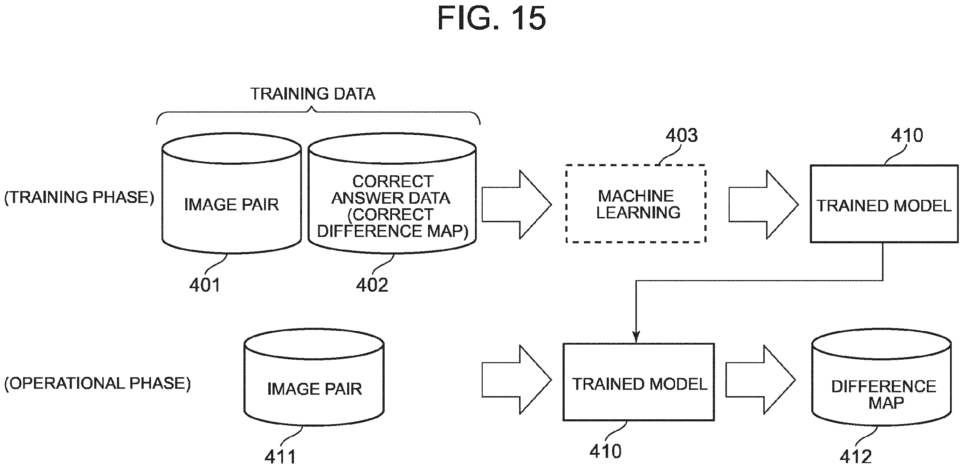

FIG. 15 is a block diagram showing a general system that generates a difference map using a trained model. In the system shown in FIG. 15, at the training phase, the learning model is trained by machine learning 403 using an image pair 401 and correct answer data (for example, correct difference map) 402 as learning data (training data). As a result of training, a trained model 410 is obtained. Then, at the operational phase, a difference map 412 is generated from an image pair 411 using the trained model 410. The correct difference map is a difference map used as the correct answer data.

When the method described in patent literature 1 is used, as described in paragraph 0019 of patent literature 1, the correct answer data is manually generated. Therefore, it takes time to obtain lots of correct answer data. In addition, it is possible that the correct answer data generated by one preparer may differ from the correct answer data generated by another preparer. Therefore, objectivity of correct answer data cannot be guaranteed. In other words, there is a possibility that correct answer data reflecting individual differences may be generated.

When the method described in non-patent literature 1 is used, the first image 331 and the second image 332 that are sources of the synthesized difference map 333 are manually generated. The synthesized difference map 333 may deviate from a difference map obtained from an actual observed image, even if the synthesized difference map 333 that can be used as the correct answer data is automatically generated from the first image 331 and the second image 332. This is because the original first image 331 and the original second image 332 are artificially generated. As a result, when the synthesized difference map 333 is used as the correct difference map, it may deviate from a correct difference map obtained from the actual observed images.

It is an object of the present invention to provide an image processing device and an image processing method that can generate an image capable of identifying a difference part between two input images in a short time without being affected by individual differences, and that can eliminate the deviation of the image from an image obtained from the actual observed image.

**Solution to Problem**

An image processing device according to the present invention includes image deformation means for deforming object presence areas in two object presence images, in which one or more objects are present, obtained from each of two observed images to generate two deformed images, based on an observation angle of each of the two observed images and a size of the object appearing in each of the two observed images, and image generation means for generating a synthesized image by synthesizing the two deformed images, determining difference of the object between the two object presence images, and generating an image capable of identifying the determined difference.

An image processing method according to the present invention includes deforming object presence areas in two object presence images, in which one or more objects are present, obtained from each of two observed images to generate two deformed images, based on an observation angle of each of the two observed images and a size of the object appearing in each of the two observed images, and generating a synthesized image by synthesizing the two deformed images, determining difference of the object between the two object presence images, and generating an image capable of identifying the determined difference.

An image processing program according to the present invention causes a computer to execute a process of deforming object presence areas in two object presence images, in which one or more objects are present, obtained from each of two observed images to generate two deformed images, based on an observation angle of each of the two observed images and a size of the object appearing in each of the two observed images, and a process of generating a synthesized image by synthesizing the two deformed images, determining difference of the object between the two object presence images, and generating an image capable of identifying the determined difference.

**Advantageous Effects of Invention**

According to the present invention, it is possible to generate an image capable of identifying a difference part between two input images in a short time without being affected by individual differences, and to eliminate the deviation of the image from an image obtained from the actual observed image.

**Brief Description of Drawings**

[FIG. 1] It depicts a block diagram showing main components of an example embodiment of an image processing device.
[FIG. 2] It depicts an explanatory diagram showing an example of a correct difference map generation method.
[FIG. 3A] It depicts an explanatory diagram for explaining the incidence angle and the range azimuth of an electromagnetic wave.
[FIG. 3B] It depicts an explanatory diagram for explaining the incidence angle and the range azimuth of an electromagnetic wave.
[FIG. 4] It depicts an explanatory diagram for explaining a collapse amount.
[FIG. 5A] It depicts an explanatory diagram for explaining a dilating process.
[FIG. 5B] It depicts an explanatory diagram for explaining a dilating process.
[FIG. 6] It depicts an explanatory diagram for explaining deformation of the object.
[FIG. 7] It depicts an explanatory diagram for explaining a noise elimination process.
[FIG. 8] It depicts a block diagram showing a configuration example of a correct difference map generation means.
[FIG. 9] It depicts a flowchart showing an example of an operation of a correct difference map generation means.
[FIG. 10] It depicts a block diagram showing an exemplary configuration of an information processing device capable of implementing the functions of the image processing device.
[FIG. 11] It depicts a block diagram showing the main part of the image processing device.
[FIG. 12] It depicts a block diagram showing the main part of another image processing device.
[FIG. 13] It depicts a block diagram showing the main part of still another image processing device.
[FIG. 14] It depicts an explanatory diagram showing a concept of a difference map generation method.
[FIG. 15] It depicts a block diagram showing a general system that generates a difference map using a trained model.

**Description of Embodiments**

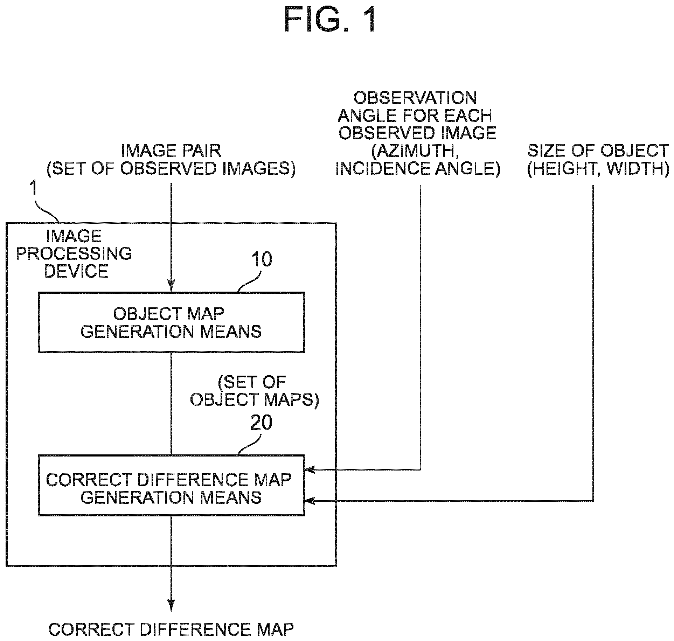

FIG. 1 is a block diagram showing main components of an example embodiment of an image processing device. The image processing device 1 shown in FIG.

1 includes an object map generation means 10 and a correct difference map generation means 20.

A set of observed images is input to the object map generating means 10. The object map generation means 10 extracts from each of the observed images an image (object presence image) including an object presence area in which an object that is a target of change detection is present. In other words, the object map generation means 10 generates a set of object maps. The set of object maps correspond to the image pair described above. For example, the object map generation means 10 extracts predetermined areas from the observed images, but it is also possible to manually extract areas from the observed images.

An observation angle (azimuth and incidence angle) and a size (height and width) of the object in each of the observed images are input to the correct difference map generation means 20. The size of the object is predetermined depending on the object that is a target of change detection.

The correct difference map generation means 20 deforms each object map based on the observed angle and the size of the object in each of the observed images. Further, the correct difference map generation means 20 generates an image showing an area where the object has changed between the two object maps, i.e., a difference map, by synthesizing the deformed object maps to generate a synthesized image. The difference map generated by the correct difference map generation means 20 is output as a correct difference map.

Next, examples of an object map generating method and a correct difference map generating method will be explained. Hereinafter, a SAR image is used as an example of the observed image. In addition , an automobile is used as an example of the object.

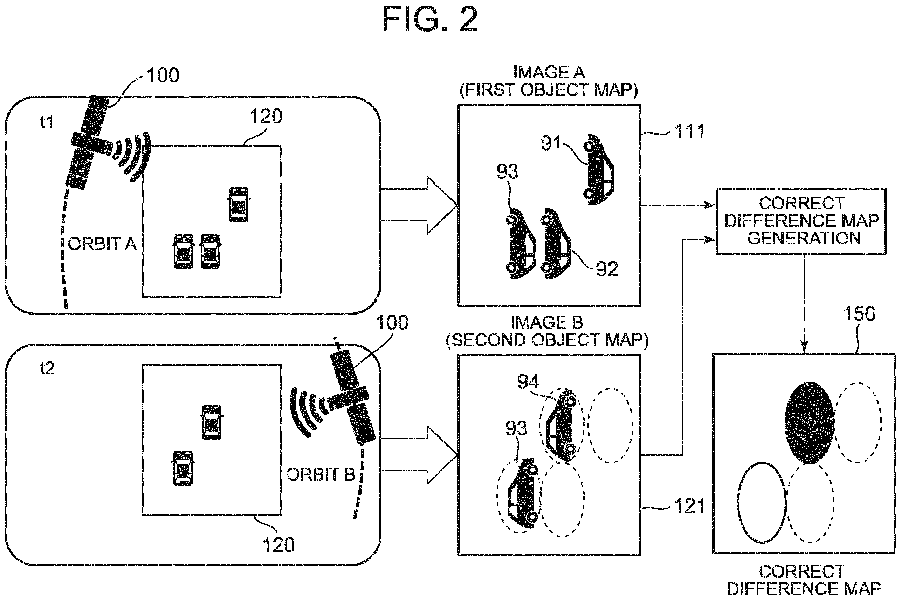

FIG. 2 is an explanatory diagram showing an example of a correct difference map generation method. On the left side of the upper row of FIG. 2, an aspect is shown that a satellite 100 passing through the orbit A takes a picture of an area including a parking lot 120 at time t1. On the left side of the lower row of FIG. 2, an aspect is shown that a satellite 100 passing through the orbit B which is different from the orbit A takes a picture of the area including the parking lot 120 at time t2 which is different from time 11. The time t2 is later than the time t1.

On the center of the upper row of FIG. 2, an example of an image A (a first object map 111) obtained from the observed image at the time t1 is shown. Three automobiles 91, 92, 93 are present in the image A. On the center of the lower row of FIG. 2, an example of an image B (a second object map 121) obtained from the observed image at time t2 is shown. Two automobiles 93, 94 are present in the image B. At the time t2, the automobiles 91, 92, which were present at time 11, have disappeared. In addition, a new automobile 94 appears at time t2. In other words, a new automobile 94 has appeared between the time t1 and the time t2.

In this example, the first object map 111 and the second object map 121 correspond to images of the parking lot 200.

The correct difference map generation means 20 generates a correct difference map 150 using the image A and the image B. In the correct difference map 150, the ellipse surrounded by a solid line indicates an area where the automobile 93 that has not changed from the time t1 to the time t2 exists. In other words, it indicates an area where there is no change. The black ellipse indicates an area where the newly appeared automobile 94 exists. The ellipses surrounded by dashed lines indicate areas where the disappeared automobiles 91, 92 existed. In other words, the black ellipse and the ellipse surrounded by a dashed line indicate a change area.

In the correct difference map 150, the change area and the non-change area can be distinguishable by a different expression than that illustrated in FIG. 2. As an example, a color difference may be used to distinguish the change area from the non-change area.

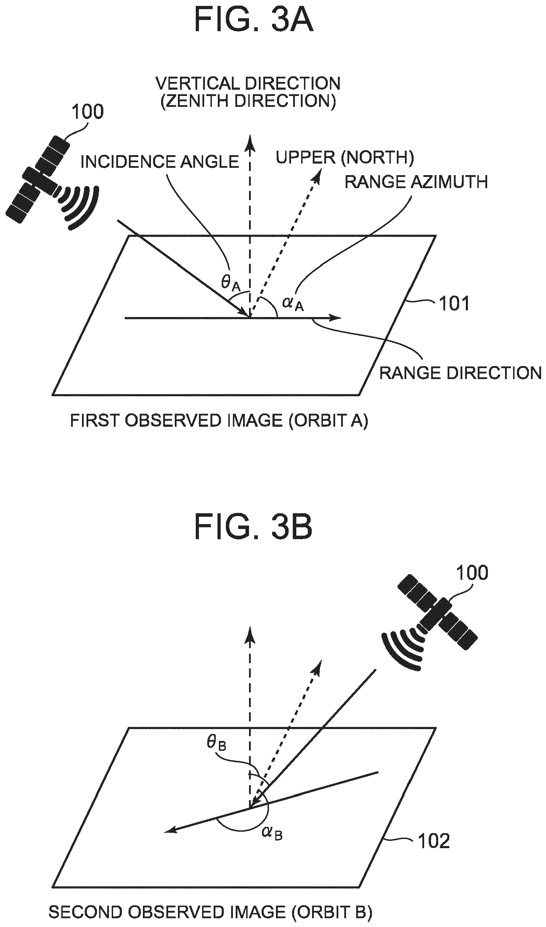

FIGs. 3A and 3B are explanatory diagrams for explaining the incidence angle and the azimuth (range azimuth). FIGs. 3A and 3B show the first observed image 101 obtained in the orbit A and the second observed image 102 obtained in the orbit B which is different from the orbit A. For the first observed image 101 and the second observed image 102, the incident angles $\theta_A$, $\theta_B$ correspond to angles from the zenith direction to a direction of the satellite 100. The range azimuths $\alpha_A$, $\alpha_B$ correspond to angles in the range direction for a reference direction (for example, a north direction).

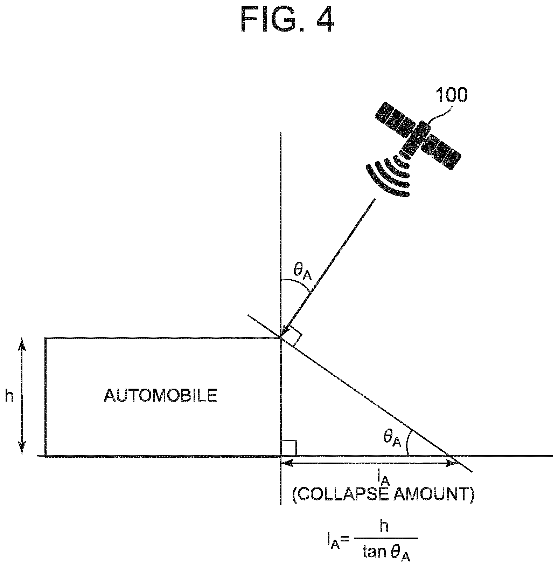

FIG. 4 is an explanatory diagram for explaining a distance of collapse (collapse amount) $l_A$. Assuming that the height of the object (in this example, an automobile) is h and the incidence angle of the electromagnetic wave is $\theta_A$, the collapse amount $l_A$ is expressed by the following equation (1).

$$l_A = h/\tan\theta_A \qquad (1)$$

When the observed image is an optical image, assuming that the incidence angle of sunlight is $\theta_A$, the collapse amount $l_A$ is expressed by the following equation (2).

$$l_A = h \cdot \tan\theta_A \qquad (2)$$

Since the case of SAR images is used as an example in this example embodiment, hereinafter, the collapse amount with respect to image A is denoted as $l_A$ and the collapse amount with respect to image B is denoted as $l_B$ ($l_B = h/\tan\theta_B$). When an optical image is used, the collapse amount with respect to image B is $l_B$ ($l_B = h/\tan\theta_B$).

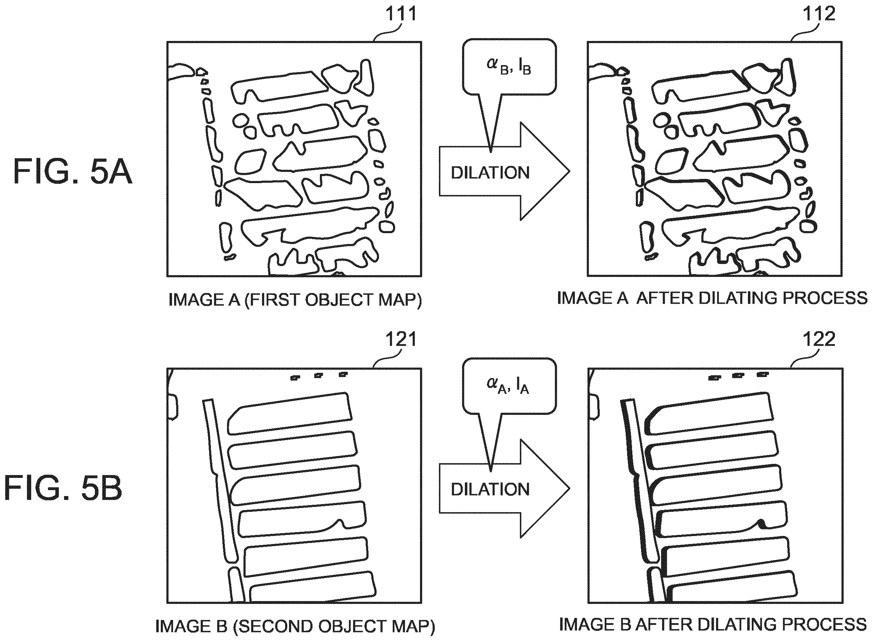

FIGs. 5A and 5B are explanatory diagrams for explaining a dilating process performed by the correct difference map generation means 20.

As shown in FIGs. 5A and 5B, the correct difference map generation means 20 performs a dilating process on the image A (the first object map 111) based on the first observed image 101 (refer to FIG. 3A) obtained in the orbit A. In this example embodiment, the correct difference map generation means 20 dilates an object (in this example, an automobile) appearing in the image A in the collapsing direction of the corresponding object in image B by a length corresponding to the collapse amount of the object in the image B. As a result, an image A after the dilating process (the first object map 112 in which the object is dilated) is obtained. Further, the correct difference map generation means 20 performs a dilating process on the image B (the first object map 121) based on the second observed image 102 (refer to FIG. 3B) obtained in the orbit B. In this example embodiment, the correct difference map generation means 20 dilates an object appearing in the image B in the collapsing direction of the corresponding object in image A by a length corresponding to the collapse amount of the object in the image A. As a result, an image B after the dilating process (the second object map 122 in which the object is dilated) is obtained.

In the first object map 112 and the second object map 121 shown in FIGs. 5A and 5B, the black areas indicate areas which dilate, i.e., the dilating areas.

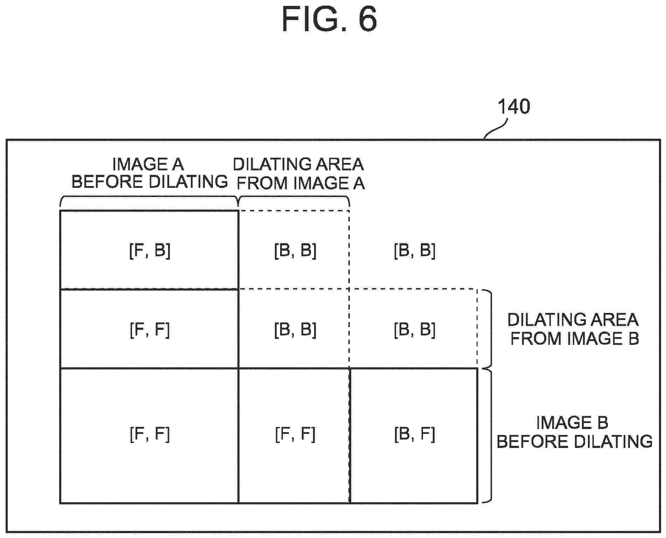

FIG. 6 is an explanatory diagram for explaining deformation of the object.

The correct difference map generation means 20 superimposes the image A after the dilating process, i.e., the first object map 112 on the image B after the dilating process, i.e., the second object map 122. FIG. 6 schematically represents a synthesized image (a difference map) 140 after superimposition.

It is assumed that the observed image that is a source of the image B has been obtained later in time than the observed image that is a source of the image A.

In FIG. 6, the area [F, B] indicates an area where the object was present in the first object map 112 but not in the second object map 122. In other words, the area [F, B] indicates an area where the object has disappeared. The area [F, F] indicates an area where the object exists in the first object map 112 and the second second object map 122. In other words, the area [F, F] indicates an area where no change has occurred. The area [B, F] indicates an area where the object was not present in the first object map 112 but is present in the second object map 122. In other words, the area [B, F] indicates an area where the object newly appeared. The area [B, B] indicates an area where the object does not exist in either the first object map 112 or the second object map 122. In other words, the area [B, B] indicates an area where no change has occurred.

The correct difference map generation means 20 generates the difference map 140 based on the concept as illustrated in FIG. 6. Specifically, the correct difference map generation means 20 generates the difference map 140 capable of distinguishing a change areas (an areas where an object has disappeared or appeared) from a non-change area.

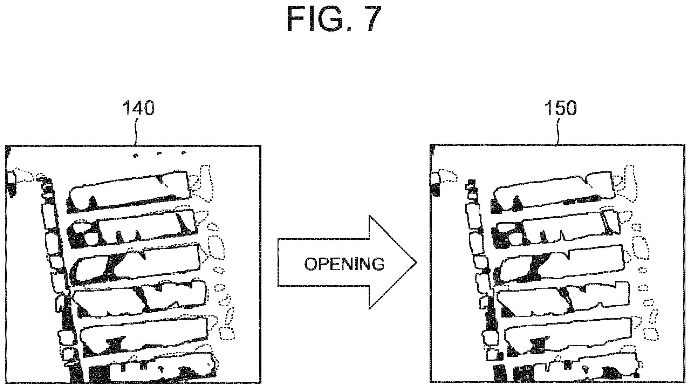

FIG. 7 is an explanatory diagram for explaining a noise elimination process.

In the difference map 140 and the correct difference map 150 shown in FIG. 7, the black areas correspond to the area [B, F] illustrated in FIG. 6. In other words, the black areas indicate areas where the object has disappeared. The areas surrounded by dashed lines correspond to the area [F, B] illustrated in FIG. 6. In other words, the areas surrounded by dashed lines indicate areas where the object has disappeared. The areas surrounded by solid lines correspond to the area [F, F] or the area [B, B] illustrated in FIG. 6. In other words, the areas surrounded by solid lines indicate areas where no change has occurred.

The correct difference map generation means 20 applies a noise elimination process to the difference map 140. The noise elimination process is a process to eliminate areas that are smaller than the object as noises. In the example shown in FIG. 7, the correct difference map generation means 20 applies an opening process to the difference map 140. The opening process is a combination of erosion and dilation. When the correct difference map generation means 20 performs the erosion process in the opening process, the correct difference map generation means 20 erodes the object by the number of pixels corresponding to the size of the object.

Although the difference map in which the noise has been eliminated is used as the correct difference map 150 in this example embodiment, the difference map 140 before the noise elimination process is applied may be used as the correct difference map, in site of the fact that noise remains.

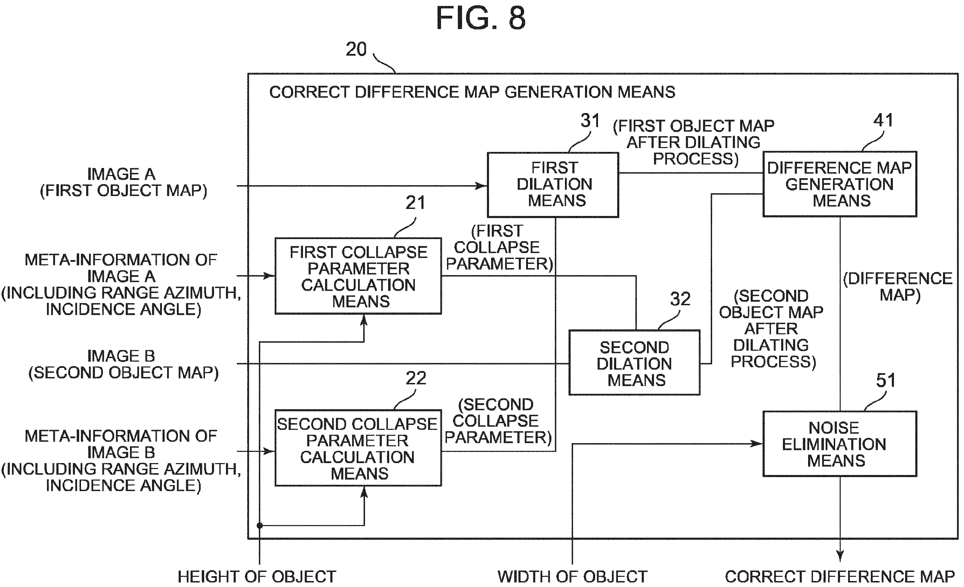

FIG. 8 is a block diagram showing a specific configuration example of a correct difference map generation means 20. The correct difference map generation means 20 shown in FIG. 8 includes a first collapse parameter calculation means 21, a second collapse parameter calculation means 22, a first dilation means 31, a second dilation means 32, a difference map generation means 41 and a noise elimination means 51.

The first collapse parameter calculation means 21 is provided with a range azimuth, an incidence angle and a height of the object regarding the image A (the first object map 111). The first collapse parameter calculation means 21 calculates the collapse amount of the object in the image A using the incidence angle and the height of the object. The first collapse parameter calculation means 21 also determines the collapsing direction of the object in the image A using the range azimuth. The collapsing direction is the same as the direction indicated by the range azimuth $\alpha_A$. The first collapse parameter calculation means 21 outputs the first collapse parameter to the second dilation means 32. The first collapse parameter includes at least data indicating a collapse amount of the object and data indicating a collapsing direction of the object.

The second collapse parameter calculation means 22 is provided with a range azimuth, an incidence angle and a height of the object regarding the image B (the second object map 121). The second collapse parameter calculation means 22 calculates the collapse amount of the object in the image B using the incidence angle and the height of the object. The second collapse parameter calculation means 22 also determines the collapsing direction of the object in image B using the range azimuth. The collapsing direction is the same as the direction indicated by the range azimuth $\alpha_B$. The second collapse parameter calculation means 22 outputs the second collapse parameter to the first dilation means 31. The second collapse parameter includes at least data indicating a collapse amount of the object and data indicating a collapsing direction of the object.

When an optical image is used as the observed image, the first collapse parameter calculation means 21 calculates a direction indicated by the range azimuth $\alpha_A$ + 180 degrees (or the range azimuth $\alpha_A$ - 180 degrees) as the collapsing direction in the first collapse parameter. The second collapse parameter calculation means 22 calculates the direction indicated by the range azimuth $\alpha_B$ + 180 degrees (or the range azimuth $\alpha_B$ - 180 degrees) as the collapsing direction in the second collapse parameter.

The image A and the second collapse parameter are input to the first dilation means 31. The first dilation means 31 dilates the object in the image A using the second collapse parameter to generate an image A (a first object map 112) in which the object is dilated. The first dilation means 31 outputs the first object map 112 to the difference map generation means 41.

The image B and the first collapse parameter are input to the second dilation means 32. The second dilation means 32 dilates the object in the image B using the first collapse parameter to generate an image B (a second object map 122) in which the object is dilated. The second dilation means 32 outputs the second object map 122 to the difference map generation means 41.

The difference map generation means 41 superimposes the first object map 112 on the second object map 122. In other words, the difference map generation means 41 synthesizes the first object map 112 and the second object map 122. Then, the difference map generation means 41 determines a difference (disappearance or appearance) between the object in the first object map 112 and the corresponding object in the second object map 122 to the object in the first object map 112. The difference map generation means 41 modifies the synthesized image, in which the first object map 112 is superimposed on the second object map 122, to an image capable of distinguishing a change areas from a non-change area, and outputs the image as the difference map 140 to the noise elimination means 51.

The noise elimination means 51 applies an opening process to the difference map 140 and outputs an image in which noises are eliminated as the correct difference map.

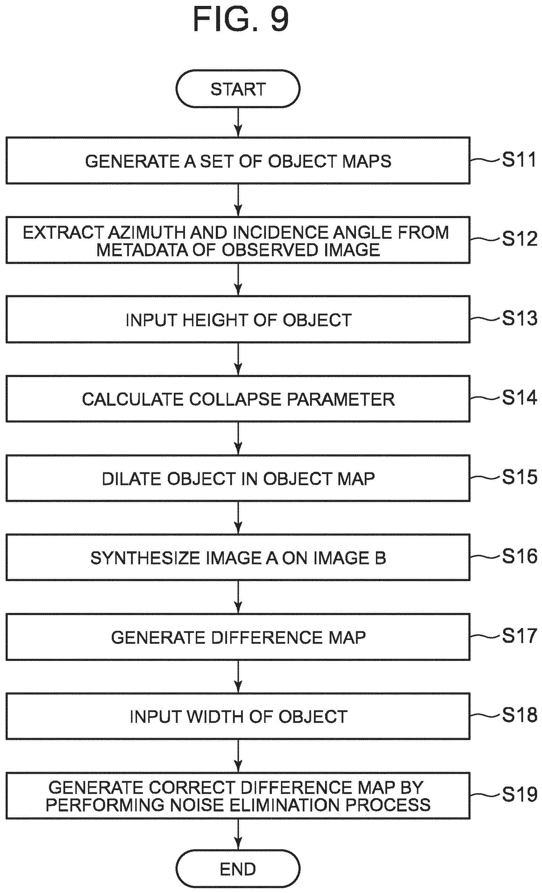

Next, the operation of the correct difference map generation means 20 is explained with reference to the flowchart in FIG. 9.

As shown in FIG. 9, the object map generation means 10 (not shown in FIG. 8) extracts from each of input observed images in a set of observed images an image (an object presence image) that includes an object presence area where the object that is the target of change detection exists. The two extracted object presence images constitute a set of object maps (step S11). In this example embodiment, the two observed images that constitute the set of observed images are, for example, SAR images based on images taken from the satellite 100 at different orbits at different times. The object maps generated in the process of step S11 correspond to the first object map 111 and the second object map 121 shown in FIG. 5.

Meta-information of one observed image is input to the first collapse parameter calculation means 21. Meta-information of the other observed image is input to the second collapsed parameter calculation means 22. In general, an available observed image is accompanied by meta-information (metadata) such as the time of shooting, the shooting location (for example, latitude and longitude of the center of the observed image), and the direction of electromagnetic radiation (observation direction), etc. The first collapse parameter calculation means 21 extracts the range azimuth $\alpha_A$ and the incidence angle $\theta_A$ from the meta-information of one observed image, and the second collapse parameter calculation means 22 extracts the range azimuth $\alpha_B$ and the incidence angle $\theta_B$ from the meta-information of the other observed image (step S 12).

It is not essential that the first collapse parameter calculation means 21 and the second collapse parameter calculation means 22 extract a range azimuths and an incidence angle from the meta-information. For example, means other than the first collapse parameter calculation means 21 and the second collapse parameter calculation means 22 may extract a range azimuth and an incidence angle from the meta-information. In such a case, the means provides the extracted range azimuth and the extracted incidence angle to the first collapse parameter calculation means 21 and the second collapse parameter calculation means 22.

Data indicating the height h of the object is input to the first collapse parameter calculation means 21 and the second collapse parameter calculation means 22 (step S13).

The processing order of steps S11-S13 is arbitrary. That is, the processing order of steps S 11-S 13 does not necessarily have to be the order shown in FIG. 9. The height h of the object is set in advance. For example, when the object is an automobile, a value of the height of an ordinary automobile or a value with a margin to it is input to the object map generation means 10 as the height h of the object.

The first collapse parameter calculation means 21 and the second collapse parameter calculation means 22 calculate the collapse parameters (step S14). In step S14, the first collapse parameter calculation means 21 calculates the collapse amount $I_A$ of the object in the image A by the above equation (1) using the incidence angle $\theta_A$ obtained in the process of step S12 and the height h of the object. The first collapse parameter calculation means 21 regards the range azimuth $\alpha_A$ obtained in the process of step S12 as the collapsing direction of the object. The first collapse parameter calculation means 21 regards the obtained collapse amount and the collapsing direction as the first collapse parameter. When there are multiple objects in the image A, the first collapse parameter calculation means 21 determines the collapse amount and collapsing direction of each object, and includes each collapse amount and each collapsing direction in the first collapse parameter.

In step S14, the second collapse parameter calculation means 22 calculates the collapse amount $I_B$ of the object in the image B by the above equation (1) using the incidence angle $\theta_B$ obtained in the process of step S12 and the height h of the object. The second collapse parameter calculation means 22 regards the range azimuth $\alpha_B$ obtained in the process of step S12 as the collapsing direction of the object. The second collapse parameter calculation means 22 regards the obtained collapse amount and the collapsing direction as the second collapse parameter. When there are multiple objects in the image B, the second collapse parameter calculation means 22 determines the collapse amount and collapsing direction of each object, and includes each collapse amount and each collapsing direction in the second collapse parameter.

When an optical image is used as the observed image, the first collapse parameter calculation means 21 determines a direction which is different from the range azimuth $\alpha_A$ by 180 degrees as the collapsing direction in the first collapse parameter. The second collapse parameter calculation means 22 determines a direction which is different from the range azimuth $\alpha_B$ by 180 degrees as the collapsing direction in the second collapse parameter.

The first dilation means 31 and the second dilation means 32 dilate the object in the object map (image A or image B) (step S15). In step S15, the first dilation means 31 dilates the object in the image A in the collapsing direction included in the second collapse parameter by the collapse amount $I_B$. The second dilation means 32 dilates the object in image B in the collapsed direction included in the first collapsed parameter by the collapsed amount Ia.

The difference map generation means 41 superimposes the image A (the first object map 112: refer to FIG. 5A) on the image B (the second object map 122:

refer to FIG. 5B) in which the object is dilated (step S16).

The difference map generation means 41 determines whether the object has changed or not based on the multiplicity of the object in the synthesized image generated in the process of step S16. For example, the difference map generation means 41 compares the first object map 112 and the second object map 122 pixel by pixel (every pixel) to determine whether the object has changed or not. Then, as illustrated in FIG. 6, the difference map generation means 41 determines that the object that was present in image A but is not present in image B is the object that has disappeared (changed object). The difference map generation means 41 also determines that the object that was not present in image A but is present in image B is a newly appeared object (changed object). The difference map generation means 41 determines other objects as unchanged objects.

The difference map generation means 41 generates the difference map 140 (refer to FIG. 7) by reflecting the determination result as to whether the image has changed or not in the synthesized image generated in the process of step S16 (step S17).

Data indicating the width of the object is input to the noise elimination means 51 (step S18). The width of the object is set in advance. For example, when the object is an automobile, the value of the width of an ordinary automobile or a value with a margin to it is input to the noise elimination means 51 as the width of the object. It should be noted that he process of step S18 does not have to be performed at the timing shown in FIG. 9. That is, the width of the object need only be input before the execution of the process of step S19 is started.

The noise elimination means 51 applies an opening process to the difference map 140 and outputs an image in which noises are eliminated as the correct difference map (step S19). In the process of step S19, the noise elimination means 51 erodes the object by the number of pixels corresponding to the size (specifically, the width) of the object in the erosion process in the opening process. The number of pixels to be eroded is determined in advance according to the size of the object. Therefore, it is set to the number of pixels that can be eliminated from the collection of pixels that should be determined not to be the object. As an example, when the maximum width of the object is 3 pixels, the noise elimination means 51 performs the erosion process two times so that blocks with a size of less than 3 pixels, i.e., equal to or less than 2 pixels will be eliminated.

As explained above, the image processing device of this example embodiment generates a difference map as a correct answer to be used as training data for machine learning, based on actual observed images. Therefore, the difference map can be generated in a short time without being affected by individual differences, as is the case when the difference map is manually generated. It is also possible to eliminate possibility that the difference map deviates from the image obtained from the actual observed images.

In addition, as described above, it is preferably that the image processing device is configured to dilate the object presence area in the first object map 111 in accordance with the collapsing direction and the collapse amount of the object in the second object map 121, and dilate the object presence area in the second object map 121 in accordance with the collapsing direction and the collapse amount of the object in the first object map 111. In such a configuration, the visibility of the object in one of the two object maps with different observation directions can be brought closer to the visibility of the object in the other object map.

Therefore, accuracy of detecting change/non-change in the object presence area using the image obtained by synthesizing the first object map 111 and the second object map 121 is improved.

In addition, as described above, it is preferably that the image processing device is configured to eliminate areas whose sizes are smaller than a predetermined value determined based on the width of the object. In such a configuration, when a small size area is determined to be a change area in the synthesized image, the difference map finally obtained (the difference map used as the correct difference map) becomes to be a map that does not include change areas other than the object. Therefore, the reliability of the correct difference map can be increased.

The image processing device of the above example embodiment can be configured with hardware, but can also be configured with a computer program.

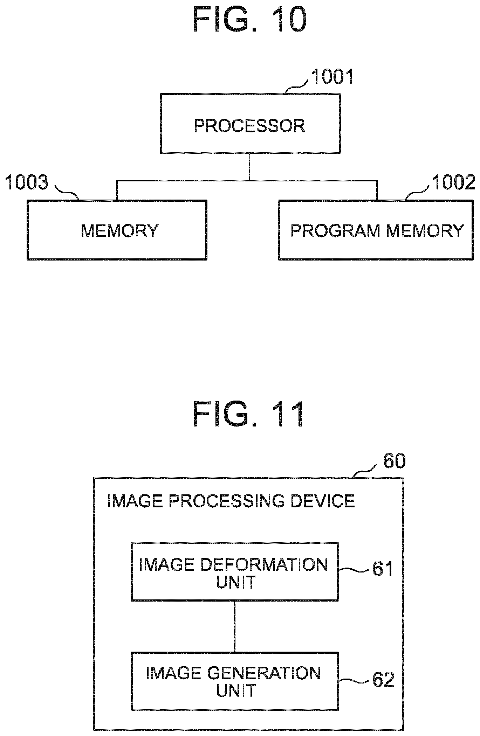

FIG. 10 is a block diagram showing an exemplary configuration of an information processing device capable of implementing the functions of the image processing device of the above example embodiment. The information processing device shown in FIG. 10 includes one or more processors such as one or more CPUs (Central Processing Unit), a program memory 1002 and a memory 1003. FIG. 10 illustrates an information processing device having one processor 1001.

The program memory 1002 is, for example, a non-transitory computer readable medium. The non-transitory computer readable medium is one of various types of tangible storage media. For example, as the program memory 1002, a semiconductor storage medium such as a flash ROM (Read Only Memory) or a magnetic storage medium such as a hard disk can be used. In the program memory 1002, an image processing program for realizing functions of blocks (the object map generation means 10, the correct difference map generation means 20, the first collapse parameter calculation means 21, the second collapse parameter calculation means 22, the first dilation means 31, the second dilation means 32, the difference map generation means 41, the noise elimination means 51) in the image processing device of the above example embodiment is stored.

The processor 1001 realizes the function of the image processing device by executing processing according to the image processing program stored in the program memory 1002. When multiple processors are implemented, they can also work together to realize the function of the image processing device.

For example, a RAM (Random Access Memory) can be used as the memory 1003. In the memory 1003, temporary data that is generated when the image processing device executes processing, etc. are stored. It can be assumed that an image processing program is transferred to the memory 1003 and the processor 1001 executes processing based on the image processing program in the memory 1003. The program memory 1002 and the memory 1003 may be integrated into a single unit.

FIG. 11 is a block diagram showing the main part of the image processing device. The image processing device 60 shown in FIG. 11 comprises an image deformation unit (image deformation means) 61 (in the example embodiment, realized by the first dilation means 31 and the second dilation means 32) which deforms object presence areas in two object presence images (for example, the first object map 111 and the second object map 121), in which one or more objects are present, obtained from each of two observed images to generate two deformed images (for example, the first object map 112 and the second object map 122), based on an observation angle (for example, range azimuth and incidence angle) of each of the two observed images and a size of the object (for example, a height of the object) appearing in each of the two observed images, and an image generation unit (image generation means) 62 (in the example embodiment, realized by the difference map generation means 41) which generates a synthesized image by synthesizing the two deformed images, determining difference of the object between the two object presence images, and generating an image (for example, the difference map 140) capable of identifying the determined difference.

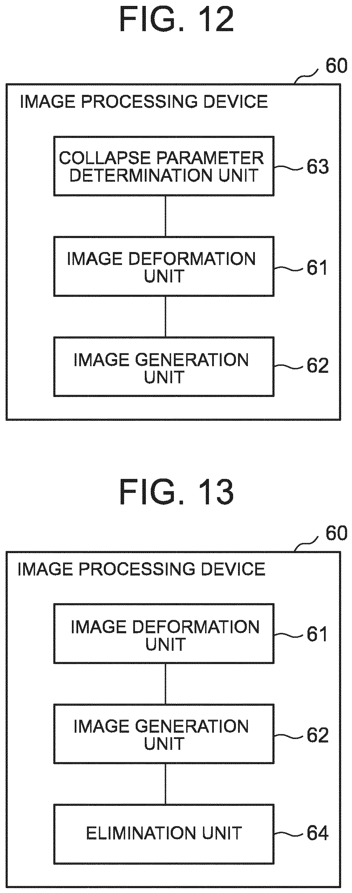

As shown in FIG. 12, the image processing device 60 may further comprise a parameter determination unit (parameter determination means) 63 (in the example embodiment, realized by the first collapse parameter calculation means 21 and the second collapse parameter calculation means 22) which calculates the collapse amount using the observation angle and the height of the object included in metadata of the two observed images.

As shown in FIG. 13, the image processing device 60 may further comprise an elimination unit (elimination means) 64 (in the example embodiment, realized by the noise elimination means 51) which eliminates areas whose sizes are smaller than a predetermined value determined based on the width of the object.

Apart of or all of the above example embodiments may also be described as, but not limited to, the following supplementary notes.

(Supplementary note 1) An image processing device comprising:

image deformation means for deforming object presence areas in two object presence images, in which one or more objects are present, obtained from each of two observed images to generate two deformed images, based on an observation angle of each of the two observed images and a size of the object appearing in each of the two observed images, and image generation means for generating a synthesized image by synthesizing the two deformed images, determining difference of the object between the two object presence images, and generating an image capable of identifying the determined difference.

(Supplementary note 2) The image processing device according to Supplementary note 1, wherein image deformation means dilates the object presence area by a predetermined amount in each of the two object presence images.

(Supplementary note 3) The image processing device according to Supplementary note 2, wherein image deformation means dilates the object presence area in a first object presence image of the two object presence images in accordance with collapsing direction and collapse amount of the object in a second object presence image of the two object presence images, and dilates the object presence area in the second object presence image in accordance with collapsing direction and collapse amount of the object in the first object presence image.

(Supplementary note 4) The image processing device according to Supplementary note 3, further comprising

parameter determination means for calculating the collapse amount using the observation angle and a height of the object included in metadata of the two observed images, and determining the collapsing direction based on a observation direction included in the metadata of the observed image.

(Supplementary note 5) The image processing device according to any one of Supplementary notes 1 to 4, further comprising

elimination means for eliminating areas whose sizes are smaller than a predetermined value determined based on a width of the object.

(Supplementary note 6) An image processing method comprising:

deforming object presence areas in two object presence images, in which one or more objects are present, obtained from each of two observed images to generate two deformed images, based on an observation angle of each of the two observed images and a size of the object appearing in each of the two observed images, and
generating a synthesized image by synthesizing the two deformed images, determining difference of the object between the two object presence images, and generating an image capable of identifying the determined difference.

(Supplementary note 7) he image processing method according to Supplementary note 6, wherein the object presence area is dilated by a predetermined amount in each of the two object presence images.

(Supplementary note 8) The image processing method according to Supplementary note 7, wherein the object presence area in a first object presence image of the two object presence images is dilated in accordance with collapsing direction and collapse amount of the object in a second object presence image of the two object presence images, and the object presence area in the second object presence image is dilated in accordance with collapsing direction and collapse amount of the object in the first object presence image.

(Supplementary note 9) The image processing method according to any one of Supplementary notes 6 to 8, further comprising

eliminating areas whose sizes are smaller than a predetermined value determined based on a width of the object.

(Supplementary note 10) A computer readable recording medium storing an image processing program, wherein

the image processing program causes a computer to execute:

a process of deforming object presence areas in two object presence images, in which one or more objects are present, obtained from each of two observed images to generate two deformed images, based on an observation angle of each of the two observed images and a size of the object appearing in each of the two observed images, and
a process of generating a synthesized image by synthesizing the two deformed images, determining difference of the object between the two object presence images, and generating an image capable of identifying the determined difference.

(Supplementary note 11) The recording medium according to Supplementary note 10, wherein

the image processing program causes the computer to execute
a process of dilating the object presence area by a predetermined amount in each of the two object presence images.

(Supplementary note 12) The recording medium according to Supplementary note 11, wherein

the image processing program causes the computer to execute
a process of dilating the object presence area in a first object presence image of the two object presence images in accordance with collapsing direction and collapse amount of the object in a second object presence image of the two object presence images, and dilating the object presence area in the second object presence image in accordance with collapsing direction and collapse amount of the object in the first object presence image.

(Supplementary note 13) The recording medium according to any one of Supplementary notes 10 to 12, wherein

the image processing program causes the computer to further execute

a process of eliminating areas whose sizes are smaller than a predetermined value determined based on a width of the object.

(Supplementary note 14) An image processing program causing a computer to execute:

a process of deforming object presence areas in two object presence images, in which one or more objects are present, obtained from each of two observed images to generate two deformed images, based on an observation angle of each of the two observed images and a size of the object appearing in each of the two observed images, and

a process of generating a synthesized image by synthesizing the two deformed images, determining difference of the object between the two object presence images, and generating an image capable of identifying the determined difference.

(Supplementary note 15) The image processing program according to Supplementary note 14, causing the computer to execute

a process of dilating the object presence area by a predetermined amount in each of the two object presence images.

(Supplementary note 16) The image processing program according to Supplementary note 15, causing the computer to execute

a process of dilating the object presence area in a first object presence image of the two object presence images in accordance with collapsing direction and collapse amount of the object in a second object presence image of the two object presence images, and dilating the object presence area in the second object presence image in accordance with collapsing direction and collapse amount of the object in the first object presence image.

(Supplementary note 17) The image processing program according to any one of Supplementary notes 14 to 16, causing the computer to further execute

a process of eliminating areas whose sizes are smaller than a predetermined value determined based on a width of the object.

(Supplementary note 18) An image processing program for realizing the image processing method of any one of Supplementary notes 6 to 9.

Although the invention of the present application has been described above with reference to example embodiments, the present invention is not limited to the above example embodiments. Various changes can be made to the configuration and details of the present invention that can be understood by those skilled in the art within the scope of the present invention.

**Reference Signs List**

1       Image processing device
10      Object map generation means
20      Correct difference map generation means
21      First collapse parameter calculation means
22      Second collapse parameter calculation means
31      First dilation means
32      Second dilation means
41      Difference map generation means
51      Noise elimination means
60      Image processing device
61      Image deformation unit
62      Image generation unit
63      Collapse parameter determination unit
64      Elimination unit
100     Satellite
1001    Processor
1002    Program memory
1003    Memory

**Claims**

**1.**   An image processing device comprising:

image deformation means for deforming object presence areas in two object presence images, in which one or more objects are present, obtained from each of two observed images to generate two deformed images, based on an observation angle of each of the two observed images and a size of the object appearing in each of the two observed images, and

image generation means for generating a synthesized image by synthesizing the two deformed images, determining difference of the object between the two object presence images, and generating an image capable of identifying the determined difference.

**2.**   The image processing device according to claim 1, wherein

image deformation means dilates the object presence area by a predetermined amount in each of the two object presence images.

**3.**   The image processing device according to claim 2, wherein

image deformation means dilates the object presence area in a first object presence image of the two object presence images in accordance with collapsing direction and collapse amount of the object in a second object presence image of the two object presence images, and dilates the object presence area in the second object presence image in accordance with collapsing direction and collapse amount of the object in the first object presence image.

4. The image processing device according to claim 3, further comprising
parameter determination means for calculating the collapse amount using the observation angle and a height of the object included in metadata of the two observed images, and determining the collapsing direction based on a observation direction included in the metadata of the observed image.

5. The image processing device according to any one of claims 1 to 4, further comprising
elimination means for eliminating areas whose sizes are smaller than a predetermined value determined based on a width of the object.

6. An image processing method comprising:

deforming object presence areas in two object presence images, in which one or more objects are present, obtained from each of two observed images to generate two deformed images, based on an observation angle of each of the two observed images and a size of the object appearing in each of the two observed images, and
generating a synthesized image by synthesizing the two deformed images, determining difference of the object between the two object presence images, and generating an image capable of identifying the determined difference.

7. The image processing method according to claim 6, wherein
the object presence area is dilated by a predetermined amount in each of the two object presence images.

8. The image processing method according to claim 7, wherein
the object presence area in a first object presence image of the two object presence images is dilated in accordance with collapsing direction and collapse amount of the object in a second object presence image of the two object presence images, and the object presence area in the second object presence image is dilated in accordance with collapsing direction and collapse amount of the object in the first object presence image.

9. The image processing method according to any one of claims 6 to 8, further comprising
eliminating areas whose sizes are smaller than a predetermined value determined based on a width of the object.

10. A computer readable recording medium storing an image processing program,
wherein
the image processing program causes a computer to execute:

a process of deforming object presence areas in two object presence images, in which one or more objects are present, obtained from each of two observed images to generate two deformed images, based on an observation angle of each of the two observed images and a size of the object appearing in each of the two observed images, and
a process of generating a synthesized image by synthesizing the two deformed images, determining difference of the object between the two object presence images, and generating an image capable of identifying the determined difference.

11. The recording medium according to claim 10, wherein

the image processing program causes the computer to execute
a process of dilating the object presence area by a predetermined amount in each of the two object presence images.

12. The recording medium according to claim 11, wherein

the image processing program causes the computer to execute
a process of dilating the object presence area in a first object presence image of the two object presence images in accordance with collapsing direction and collapse amount of the object in a second object presence image of the two object presence images, and dilating the object presence area in the second object presence image in accordance with collapsing direction and collapse amount of the object in the first object presence image.

13. The recording medium according to any one of claims 10 to 12, wherein

the image processing program causes the computer to further execute
a process of eliminating areas whose sizes are smaller than a predetermined value determined based on a width of the object.

# FIG. 1

OBSERVATION
ANGLE FOR EACH
OBSERVED IMAGE
(AZIMUTH,
INCIDENCE ANGLE)

IMAGE PAIR
(SET OF OBSERVED IMAGES)

SIZE OF OBJECT
(HEIGHT, WIDTH)

1

IMAGE
PROCESSING
DEVICE

10

OBJECT MAP
GENERATION MEANS

(SET OF
OBJECT MAPS)

20

CORRECT DIFFERENCE MAP
GENERATION MEANS

CORRECT DIFFERENCE MAP

# FIG. 2

IMAGE A (FIRST OBJECT MAP)

IMAGE B (SECOND OBJECT MAP)

CORRECT DIFFERENCE MAP GENERATION

CORRECT DIFFERENCE MAP

EP 4 184 209 A1

# FIG. 3A

FIRST OBSERVED IMAGE (ORBIT A)

# FIG. 3B

SECOND OBSERVED IMAGE (ORBIT B)

# FIG. 4

$$I_A = \frac{h}{\tan \theta_A}$$

FIG. 5A

α_B, I_B

DILATION

111

IMAGE A (FIRST OBJECT MAP)

112

IMAGE A AFTER DILATING PROCESS

FIG. 5B

α_A, I_A

DILATION

121

IMAGE B (SECOND OBJECT MAP)

122

IMAGE B AFTER DILATING PROCESS

EP 4 184 209 A1

# FIG. 6

140

IMAGE A
BEFORE DILATING

DILATING AREA
FROM IMAGE A

| [F, B] | [B, B] | [B, B] |
|--------|--------|--------|
| [F, F] | [B, B] | [B, B] |
| [F, F] | [F, F] | [B, F] |

DILATING AREA
FROM IMAGE B

IMAGE B
BEFORE DILATING

FIG. 7

# FIG. 8

CORRECT DIFFERENCE MAP GENERATION MEANS — 20

IMAGE A
(FIRST OBJECT MAP)

META-INFORMATION OF
IMAGE A
(INCLUDING RANGE AZIMUTH,
INCIDENCE ANGLE)

IMAGE B
(SECOND OBJECT MAP)

META-INFORMATION OF
IMAGE B
(INCLUDING RANGE AZIMUTH,
INCIDENCE ANGLE)

31 — FIRST DILATION MEANS
(FIRST OBJECT MAP AFTER DILATING PROCESS)

21 — FIRST COLLAPSE PARAMETER CALCULATION MEANS
(FIRST COLLAPSE PARAMETER)

22 — SECOND COLLAPSE PARAMETER CALCULATION MEANS
(SECOND COLLAPSE PARAMETER)

32 — SECOND DILATION MEANS
(SECOND OBJECT MAP AFTER DILATING PROCESS)

41 — DIFFERENCE MAP GENERATION MEANS
(DIFFERENCE MAP)

51 — NOISE ELIMINATION MEANS

HEIGHT OF OBJECT

WIDTH OF OBJECT

CORRECT DIFFERENCE MAP

EP 4 184 209 A1

# FIG. 9

```
        ┌─────────┐
        │  START  │
        └─────────┘
             │
             ▼
┌─────────────────────────────────┐
│  GENERATE A SET OF OBJECT MAPS  │ ～S11
└─────────────────────────────────┘
             │
             ▼
┌───────────────────────────────────────┐
│ EXTRACT AZIMUTH AND INCIDENCE ANGLE FROM │ ～S12
│      METADATA OF OBSERVED IMAGE          │
└───────────────────────────────────────┘
             │
             ▼
┌─────────────────────────────────┐
│      INPUT HEIGHT OF OBJECT      │ ～S13
└─────────────────────────────────┘
             │
             ▼
┌─────────────────────────────────┐
│   CALCULATE COLLAPSE PARAMETER   │ ～S14
└─────────────────────────────────┘
             │
             ▼
┌─────────────────────────────────┐
│    DILATE OBJECT IN OBJECT MAP   │ ～S15
└─────────────────────────────────┘
             │
             ▼
┌─────────────────────────────────┐
│    SYNTHESIZE IMAGE A ON IMAGE B │ ～S16
└─────────────────────────────────┘
             │
             ▼
┌─────────────────────────────────┐
│     GENERATE DIFFERENCE MAP      │ ～S17
└─────────────────────────────────┘
             │
             ▼
┌─────────────────────────────────┐
│      INPUT WIDTH OF OBJECT       │ ～S18
└─────────────────────────────────┘
             │
             ▼
┌───────────────────────────────────────────┐
│ GENERATE CORRECT DIFFERENCE MAP BY          │ ～S19
│ PERFORMING NOISE ELIMINATION PROCESS        │
└───────────────────────────────────────────┘
             │
             ▼
        ┌─────────┐
        │   END   │
        └─────────┘
```

# FIG. 10

```
                            ⌒1001
                   ┌─────────────────┐
                   │   PROCESSOR     │
                   └─────────────────┘
                            │
        ┌───────────────────┴───────────────────┐
 1003⌒  │                                        │  ⌒1002
┌─────────────────┐                   ┌─────────────────────┐
│     MEMORY      │                   │   PROGRAM MEMORY    │
└─────────────────┘                   └─────────────────────┘
```

# FIG. 11

```
                                              ⌒60
┌──────────────────────────────────────────────┐
│ IMAGE PROCESSING DEVICE                        │
│                                                │
│     ┌──────────────────────────┐               │
│     │  IMAGE DEFORMATION       │ ⌒61           │
│     │  UNIT                    │               │
│     └──────────────────────────┘               │
│                 │                              │
│     ┌──────────────────────────┐               │
│     │  IMAGE GENERATION        │ ⌒62           │
│     │  UNIT                    │               │
│     └──────────────────────────┘               │
│                                                │
└──────────────────────────────────────────────┘
```

# FIG. 12

60

IMAGE PROCESSING DEVICE

COLLAPSE PARAMETER
DETERMINATION UNIT — 63

IMAGE DEFORMATION
UNIT — 61

IMAGE GENERATION
UNIT — 62

# FIG. 13

60

IMAGE PROCESSING DEVICE

IMAGE DEFORMATION
UNIT — 61

IMAGE GENERATION
UNIT — 62

ELIMINATION UNIT — 64

# FIG. 14

331

332

333

# FIG. 15

(TRAINING PHASE)

TRAINING DATA

IMAGE PAIR
401

CORRECT ANSWER DATA (CORRECT DIFFERENCE MAP)
402

MACHINE LEARNING
403

TRAINED MODEL
410

TRAINED MODEL
410

DIFFERENCE MAP
412

(OPERATIONAL PHASE)

IMAGE PAIR
411

## INTERNATIONAL SEARCH REPORT

| International application No. |
|---|
| PCT/JP2020/028065 |

**A.  CLASSIFICATION OF SUBJECT MATTER**
Int.Cl. G01S13/90(2006.01)i, G06T7/00(2017.01)i
FI: G01S13/90191, G06T7/00640

According to International Patent Classification (IPC) or to both national classification and IPC

**B.  FIELDS SEARCHED**

Minimum documentation searched (classification system followed by classification symbols)
Int.Cl. G01S7/00-7/42, 13/00-13/95, G06T7/00, H04N7/18

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)
IEEE Xplore

**C.  DOCUMENTS CONSIDERED TO BE RELEVANT**

| Category* | Citation of document, with indication, where appropriate, of the relevant passages | Relevant to claim No. |
|---|---|---|
| A | JP 2016-57092 A (NATIONAL INSTITUTE OF INFORMATION AND COMMUNICATIONS TECHNOLOGY) 21 April 2016 (2016-04-21), entire text | 1-13 |
| A | WO 2017/126547 A1 (NEC CORPORATION) 27 July 2017 (2017-07-27), entire text | 1-13 |
| A | JP 7-72244 A (NEC CORPORATION) 17 March 1995 (1995-03-17), entire text | 1-13 |
| A | JP 2000-275338 A (MITSUBISHI ELECTRIC CORPORATION) 06 October 2000 (2000-10-06), paragraphs [0059]-[0065], fig. 14-16 | 1-13 |

☒ Further documents are listed in the continuation of Box C.      ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 October 2020 | 20 October 2020 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| | International application No. |
|---|---|
| | PCT/JP2020/028065 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2014-164579 A (OKI ELECTRIC IND CO., LTD.) 08 September 2014 (2014-09-08), paragraphs [0117]-[0158], [0183]-[0204], fig. 16-20, 24-26 | 1-13 |
| A | JP 2010-278963 A (TOKYO GAS CO., LTD.) 09 December 2010 (2010-12-09), paragraphs [0051], [0052] | 1-13 |
| A | JP 2003-44996 A (MATSUSHITA ELECTRIC INDUSTRIAL CO., LTD.) 14 February 2003 (2003-02-14), paragraphs [0029]-[0041] | 1-13 |
| A | BRUZZONE, L., BOVOLO, F., "A novel framework for the design of change-detection systems for very-High-resolution remote sensing images", Proceedings of the IEEE, vol. 101, no. 3, March 2013, pp. 609-630, DOI: 10.1109/JPROC.2012.2197169, fig. 13 | 1-13 |

Form PCT/ISA/210 (second sheet) (January 2015)

**INTERNATIONAL SEARCH REPORT**
Information on patent family members

International application No.

PCT/JP2020/028065

| | | |
|---|---|---|
| JP 2016-57092 A | 21 April 2016 | (Family: none) |
| WO 2017/126547 A1 | 27 July 2017 | (Family: none) |
| JP 7-72244 A | 17 March 1995 | (Family: none) |
| JP 2000-275338 A | 06 October 2000 | (Family: none) |
| JP 2014-164579 A | 08 September 2014 | (Family: none) |
| JP 2010-278963 A | 09 December 2010 | (Family: none) |
| JP 2003-44996 A | 14 February 2003 | (Family: none) |

Form PCT/ISA/210 (patent family annex) (January 2015)

## REFERENCES CITED IN THE DESCRIPTION

**Patent documents cited in the description**

- JP 2018194404 A

**Non-patent literature cited in the description**

- **M. A. LEBEDEV et al.** CHANGE DETECTION IN REMOTE SENSING IMAGES USING CONDITIONAL ADVERSARIAL NETWORKS. *The International Archives of the Photogrammetry, Remote Sensing and Spatial Information Sciences,* 2018, vol. XLII-2